(19) Europäisches Patentamt
European Patent Office
Office européen des brevets

(11) Veröffentlichungsnummer: **0 227 947**
**A2**

(12) # EUROPÄISCHE PATENTANMELDUNG

(21) Anmeldenummer: 86116268.3

(51) Int. Cl.⁴: C08G 73/16

(22) Anmeldetag: 24.11.86

(30) Priorität: 04.12.85 DE 3542857

(43) Veröffentlichungstag der Anmeldung:
08.07.87 Patentblatt 87/28

(84) Benannte Vertragsstaaten:
AT BE CH DE FR GB IT LI LU NL SE

(71) Anmelder: **BASF Aktiengesellschaft**
**Carl-Bosch-Strasse 38**
**D-6700 Ludwigshafen(DE)**

(72) Erfinder: **Hisgen, Bernd, Dr.**
**Goethestrasse 6**
**D-6703 Limburgerhof(DE)**
Erfinder: **Portugall, Michael, Dr.**
**Raiffeisenstrasse 7**
**D-6706 Wachenheim(DE)**
Erfinder: **Reiter, Udo, Dr.**
**Reger-Strasse 22**
**D-4404 Telgte(DE)**

(54) **Vollaromatische mesomorphe Polyesterimide, deren Herstellung und Verwendung.**

(57) Vollaromatische mesomorphe Polyesterimide, die unterhalb von 320°C eine flüssigkristalline fadenbildende Schmelze bilden, aufgebaut aus

a) 5 bis 35 Mol-% wiederkehrenden Einheiten der Formeln I und/oder II

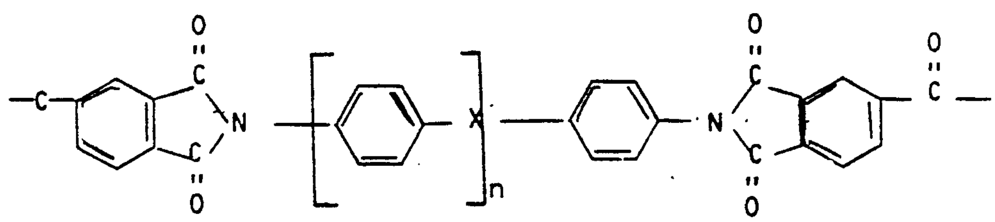

I

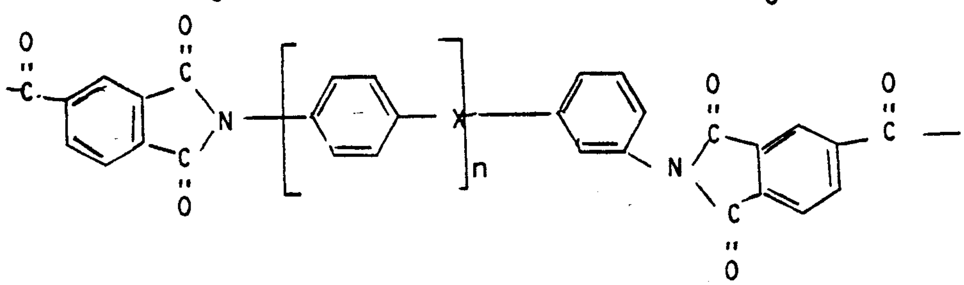

II

in der X und n jeweils gleich oder verschieden sein können, und X für -O-, -S-, $-SO_2-$, -CO-, $-CH_2-$, $=C-(CH_3)_2$-steht und n O oder 1 bedeutet.

b) O bis 3O Mol-% wiederkehrenden Einheiten der Formeln III und/oder IV

EP 0 227 947 A2

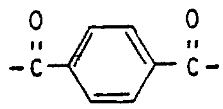 III

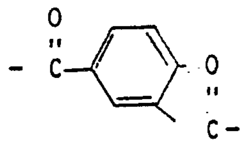 IV

c) einer Summe der Komponenten a und b entsprechenden molaren Menge mindestens einer der wiederkehrenden Einheiten der Formeln V, VI, VII oder VIII

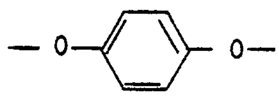 V

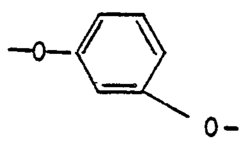 VI

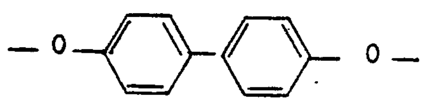 VII

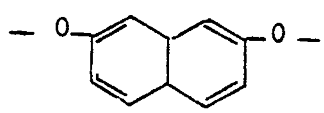 VIII

d) mindestens 10 Mol-% wiederkehrenden Einheiten der Formel IX

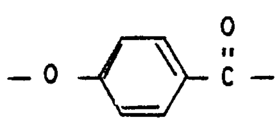 IX

e) gegebenenfalls 5 bis 25 Mol-% wiederkehrenden Einheiten der Formel X

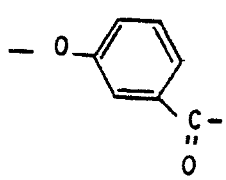 X

wobei die Summe der molaren Anteile a, b, c, d und e jeweils 100 Mol% ergibt.

## Vollaromatische mesomorphe Polyesterimide, deren Herstellung und Verwendung

Gegenstand der Erfindung sind vollaromatische mesomorphe Polyesterimide die unterhalb 320°C eine flüssigkristalline fadenbildende Schmelze bilden.

Es sind schon eine Reihe von flüssigkristallinen Polyesterimiden bekannt. Solche Polymere sind jedoch hinsichtlich ihrer Wärmeformbeständigkeit, ihrer Verarbeitbarkeit und insbesondere ihre geringen Abriebfestigkeit verbesserungsbedürfig. Aus der EP-Anmeldung 81 900 sind Polyesteramide bekannt, die zumindestens zu 40 % aus koaxialen Einheiten wie aromatischen Dicarbonsäuren, hydroxyaromatischen Carbonsäuren, Diphenolen und Aminophenolen bestehen und eine ausreichende Menge an nicht-linearen Resten enthalten, die sich von aromatischen Aminoverbindungen oder zweikernigen aromatischen Sulfonen ableiten. Es wird jedoch kein .Hinweis gegeben, welche Zusammensetzung erforderlich ist, um die geforderte Eigenschaftskombination zu erzielen. In der US-PS 4 176 223 werden Polyesterimide beschrieben, die aus Naphthalindicarbonsäure, substituierten Hydrochinonen sowie 4-(4'-Carboxy-phthalimido)-benzoesäure aufgebaut sind. Solche Polymere erfordern jedoch für ihre Verarbeitung aus der Schmelze Temperaturen von 330°C und mehr. Das gleiche gilt für die aus der US-PS 4 383 105 bekannten Polyesterimide, die aus Hydroxynaphthalincarbonsäure, Terephthalsäure, p-Hydroxibenzoesäure sowie 4-(4'-Hydroxyphthalimido)-Phenol aufgebaut sind.

Es war deshalb die technische Aufgabe gestellt, vollaromatische mesomorphe Polyesterimide zur Verfügung zu stellen, die unterhalb 320°C eine flüssigkristalline fadenbildende Schmelze bilden und sich somit leicht verarbeiten lassen und darüber hinaus eine hohe Wärmeformbeständigkeit, eine gute Abriebfestigkeit sowie eine gute Zähigkeit aufweisen.

Diese Aufgabe wird gelöst durch vollaromatische mesomorphe Polyesterimide, die unterhalb 320°C eine flüssigkristalline fadenbildende Schmelze bilden aufgebaut aus

a) 5 bis 35 Mol-% wiederkehrenden Einheiten der Formeln I und/oder II

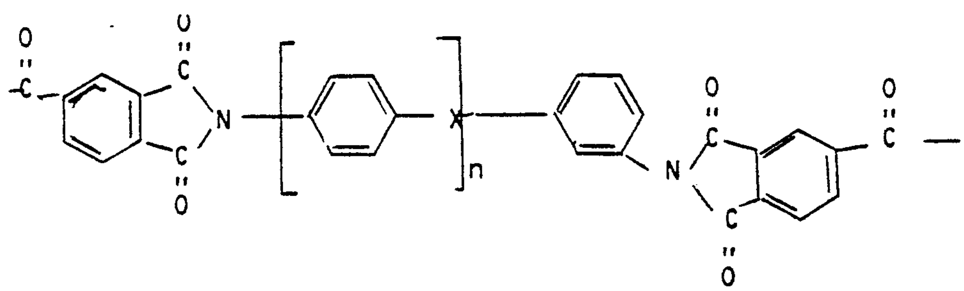

II

wobei in den Formeln I und II X und n gleich oder verschieden sein kann und X jeweils für -O,-S-, $-SO_2-$, -CO-, $-CH_2-$oder $=C(CH_3)_2$ steht und n, O oder 1 bezeichnet

b) O bis 30 Mol-% wiederkehrenden Einheiten der Formeln III und/oder IV

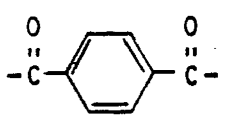

III

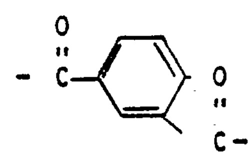

IV

c) einer Summe aus a) und b) entsprechenden molaren Menge mindestens einer der wiederkehrenden Einheiten der Formeln V, VI, VII oder VIII.

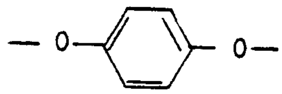 V

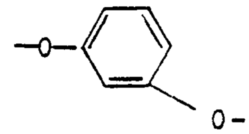 VI

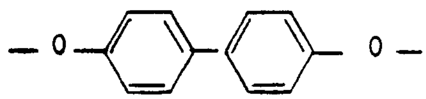 VII

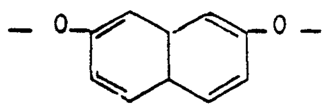 VIII

d) mindestens 10 Mol-% wiederkehrenden Einheiten der Formel IX.

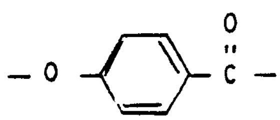 IX

e) gegebenenfalls 5 bis 25 Mol.% wiederkehrenden Einheiten der Formel X,

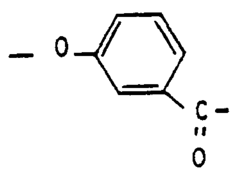 X

wobei die Summe der molaren Anteil der Komponenten a, b, c, d und e jeweils 100 Mol.% ergibt.

Die neuen vollaromatischen Polyesterimide haben den Vorteil, eine hohe Wärmeformbeständigkeit mit einer glatten abriebfesten Oberfläche zu verbinden. Weiterhin zeichnen sich die neuen Polyesterimide durch hohe Steifigkeit, Festigkeit und Zähigkeit aus. Zudem sind die neuen Polyesterimide weitgehend chemikalienbeständig und schwer brennbar. Schließlich haben die neuen Polyesterimide den Vorteil, daß sie unterhalb 320°C aus der Schmelze verarbeitbar sind.

Der flüssigkristalline Zustand der Polyesterimide kann mit dem Polarisationsmikroskop nach einer in der DE-AS 2 520 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Die erfindungsgemäßen Polyesterimide sind aufgebaut aus

a) 5 bis 35 Mol.% insbesondere 7 bis 31 Mol.% wiederkehrenden Einheiten der Formeln I und/oder II.

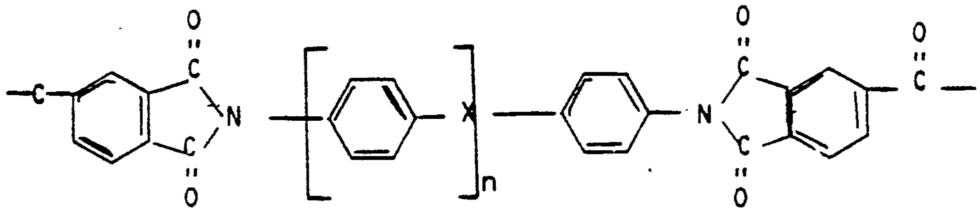

I

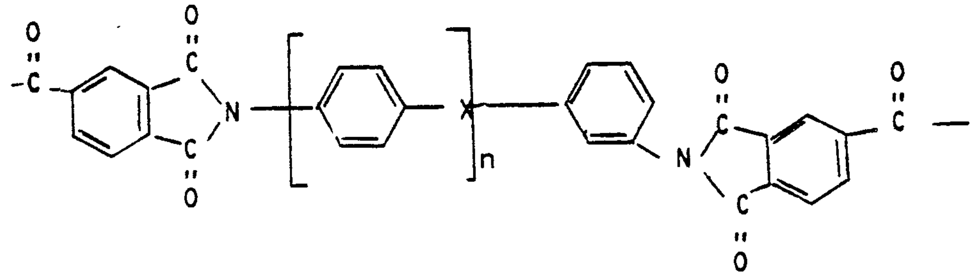

II

In den Formeln I und II können X und n jeweils gleich oder verschieden sein. X steht für -O-, -S-, $-SO_2-$, -CO-, $-CH_2-$, $=C(CH_3)_2$-insbesondere für -O-, $-SO_2-$, $-CH_2-$, n bedeutet O oder 1 insbesondere 1. Geeignete Ausgangsverbindungen sind beispielsweise

4,4'-Bis-[(4-carboxy)-N-phthalimido]diphenyhlether,
4,4'-Bis-[(4-carboxy)-N-phthalimido]diphenylmethan,
4,4'-Bis-[(4-carboxy)-N-phthalimido]diphenylsulfon.
4,4'-Bis-[(4-carboxy)-N-phthalimido]diphenylsulfid
4,4'-Bis-[(4-carboxy)-N-phthalimido]diphenylketon
3,4'-Bis-[(4-carboxy)-N-phthalimido]diphenylether
4,4'-Bis-[(4-carboxy)-N-phthalimido]diphenylsulfid
3,4'-Bis-[(4-carboxy)-N-phthalimido]diphenylsulfon
3,4'-Bis-[(4-carboxy)-N-phthalimido]diphenylketon
3,4'-Bis-[(4-carboxy)-N-phthalimido]diphenylmethan

b) O bis 3O Mol-% insbesondere O bis 2O mol.% wiederkehrenden Einheiten der Formeln III und/oder IV.

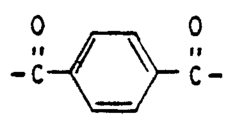

III

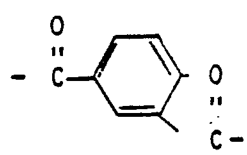

IV

Eine geeignete Ausgangsverbindung für Einheiten der Formel III ist beispielsweise Terephthalsäure und für solche der Formel IV Isophthalsäure.

c) Einer Summe aus den Komponenten a) und b) entsprechenden molaren Menge mindestens einer der wiederkehrenden Einheiten der Formeln V, VI, VII, oder VIII.

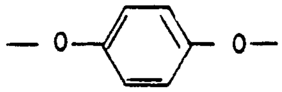 V

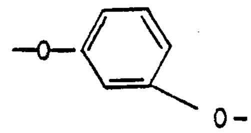 VI

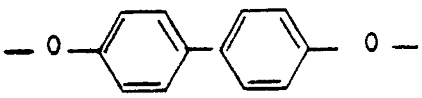 VII

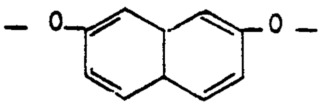 VIII

Ausgangsverbindungen sind beispielsweise für Einheiten der Formel V Hydrochinon, für Einheiten der Formel VII Resorcin, für Einheiten der Formel VII 4,4'-Dihydroxybiphenyl und für Einheiten der Formel VIII 2,7-Dihydroxynaphthalin

d) mindestens 10 Mol-% insbesondere mindestens 20 mol.% wiederkehrenden Einheiten der Formel IX

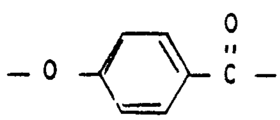 IX

Eine geeignete Ausgangsverbindung ist beispielsweise p-Hydroxybenzoesäure

e) Gegebenenfalls 5 bis 25 insbesondere 10 bis 20 Mol-% wiederkehrenden Einheiten der Formel X

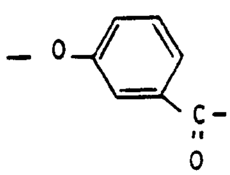 X

Eine geeignete Ausgangsverbindung ist beispielsweise m-Hydroxybenzoesäure.

Bevorzugte Polyesterimide enthalten als Komponente c 10 bis 31 Mol-% wiederkehrende Einheiten der Formel V und/oder 5 bis 25 Mol.% wiederkehrende Einheiten VI, VII oder VIII. Besonders bevorzugt als Komponente c sind wiederkehrende Einheiten der Formeln V, VI und/oder VII sowie Mischungen derselben.

Bevorzugte vollaromatische Polyesterimide haben eine Glasübergangstemperatur Tg von ≥ 140°C, insbesondere ≥ 150°C. Die Glastemperatur soll dabei gemessen werden mit der DSC-Methode, wie sie beschrieben ist von K.H. Illers und anderen in Makromolekulare Chemie, Band 127 (1969), Seiten 1 ff. Die vollaromatischen flüssigkristallinen Polyesterimide bilden bei einer Temperatur < 320°C, eine flüssigkristalline fadenbildende Schmelze. Bevorzugt sind auch flüssigkristalline aromatische Polyesterimide, die bei einer Temperatur > 200°C und < 300°C Teilkristallinität aufweisen.

Die erfindungsgemäßen flüssigkristallinen Polyesterimide lassen sich erhalten analog den Arbeitsweisen wie sie beispielsweise in den US-PSen 4 375 530 und 4 118 372 beschrieben werden.

Nach einer vorteilhaften Arbeitsweise erhält man die erfindungsgemäßen Polyesterimide in einem Einstufenverfahren bei dem man die nicht deriva tisierten Ausgangsstoffe unter Verwendung von Anhydriden niederer Fettsäuren zum Beispiel Fettsäuren mit 2 bis 4 Kohlenstoffatomen, insbesondere Essigsäureanhydrid umsetzt. Gegebenenfalls können Katalysatoren wie sie beispielsweise in der EP-A 131 846, S. 9 beschrieben sind in Mengen von 0,001 bis 1 Gew.%, bezogen auf die Ausgangsstoffe, mitverwendet werden. Die Ausgangsstoffe werden zusammen mit Fettsäureanhydrid, vorteilhaft in einen mindestens 5 %igen molaren Überschuß, bezogen auf die vorhandenen Hydroxygruppen, unter Inertgasatmosphäre und Rühren auf eine Temperatur erhitzt, bei der Rückfluß zu beobachten ist. Vorteilhaft wird die

Temperatur stufenweise gesteigert, z.B. höchstens 5 Stunden, vorzugsweise bis zu 2 Stunden auf 130 bis 200°C, anschließend wird die Temperatur z.B. innerhalb von 2 bis 2,5 Stunden auf 250 bis 350°C gesteigert. Hierbei werden überschüssige Fettsäureanhydride und Fettsäuren abdestilliert. Um die Reaktion zu vervollständigen, hat es sich als vorteilhaft erwiesen gegen Ende verminderten Druck, z.B. 200 bis 0,1 mbar anzuwenden.

Bemerkenswert und nicht vorherzusehen bei der Anwendung dieses Einstufenverfahrens ist zunächst die problemlose und vollständige Reaktion ohne Katalysatorzusatz zu den gewünschten Polymeren in einer relativ kurzen Zeit. Dies ist umso bemerkenswerter als durch die Vielzahl chemisch unterschiedlicher Hydroxygruppen eine Abstufung der Reaktivitäten und damit ein mangelhafter polymerer Aufbau zu erwarten wäre.

Die so erhaltenen vollaromatischen flüssigkristallinen Polyesterimide können nach der Kondensation in der Schmelze in festem Zustand, z.B. bei Temperaturen von 150 bis 250°C bis zur gewünschten Viskosität weiter kondensiert werden. Diese Nachkondensation in fester Phase kann sowohl vor als auch nach einer thermoplastischen Verarbeitung erfolgen. Vorteilhaft wird die Festphasenkondensation unter Mitverwendung von Inertgasen wie Stickstoff durchgeführt.

Die Polyesterimide gemäß der Erfindung übliche Zusatzstoffe in wirksamen Mengen enthalten. Geeignete Zusatzstoffe sind Stabilisatoren und Oxidationsverzögerer, Mittel gegen Wärmezersetzung und Zersetzung durch ultraviolettes Licht, Gleit-und Entformungsmittel, Färbemittel wie Farbstoffe und Pigmente, faser-oder pulverförmige Füll-und Verstärkungsmittel, Keimbildungsmittel oder Weichmacher.

Die Stabilisatoren können den Polymeren in jedem Stadium der Herstellung oder den fertigen Polymeren zugesetzt werden. Vorzugsweise werden die Stabilisatoren zu einem frühen Zeitpunkt zugesetzt um zu verhindern, daß die Zersetzung bereits beginnt, bevor die Polymeren geschützt werden können.

Geeignete Oxidationsverzögerer und Wärmestabilisatoren sind beispielsweise Halogenide von Metallen der Gruppe I des Periodischen Systems z.B. Natrium-, Kalium-oder Lithiumhalogenide mit Kupfer-I-halogeniden, z.B. Chloriden, Bromiden oder Jodiden; ferner sterisch gehinderte Phenole , Hydrochinone, verschiedene substituierte Vertreter dieser Gruppen und Kombinationen derselben. In der Regel setzt man solche Oxidationsverzögerer und Wärmestabilisatoren in Mengen bis zu 1 Gew.% auf das Gewicht des Polymeren zu.

Geeignete UV-Stabilisatoren sind beispielsweise verschiedene substituierte Resorcine, Salicylate, Benzotriazole, Benzophenone. Solche UV-Stabilisatoren werden im allgemeinen in Mengen bis zu 2 Gew.% bezogen auf das Polymere angewandt.

Ferner können zugesetzt werden organische Farbstoffe wie Nigrosin sowie Pigmente z.B. Titandioxid, Cadmiumsulfid, Cadmiumsulfid-selenid, Phthalocyanine, Ultramarinblau oder Ruß, z.B. in Mengen bis etwa 5 Gew.%.

Als geeignete pulver-und faserförmige Füllstoffe und Verstärkungsmittel seien beispielsweise genannt, Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer oder Feldspat. Verstärkungs-und Füllmittel werden im allgemeinen in Mengen bis zu 70 Gew.% bezogen auf das Polymere angewandt.

Geeignete Keimbildungsmittel sind beispielsweise Talkum, Calciumfluorid, Natriumphenylphosphinat, Aluminiumoxid oder feinverteiltes Tetrafluorethylen.

Weichmacher, die in Mengen bis zu 20 Gew.%, bezogen auf das Polymere angewandt werden, sind beispielsweise Phthalsäuredioctylester, Phthalsäuredibenzylester, Phthalsäurebutylbenzylester, Kohlenwasserstofföle, N-n-Butylbenzolsulfonamid, o-und p-Toluolethylsulfonamid.

Die erfindungsgemäßen vollaromatischen flüssigkristallinen Polyesterimide eignen sich zur Herstellung von Fäden, Folien, Schäumen und technischen Formteilen durch Spritzguß, Pressen oder Extrusion.

Die aus den erfindungsgemäßen Polyesterimiden hergestellten Formteile zeichnen sich durch hervorragende mechanische Eigenschaften wie Steifigkeit, Festigkeit und Zähigkeit aus. Sie sind außerordentlich chemikalienresistent und flammwidrig. Zudem besitzen sie eine hohe Wärmeformbeständigkeit und eine glatte, abriebfeste Oberfläche. Die erfindungs gemäßen Polyesterimide eignen sich daher hervorragend zur Herstellung von Artikeln für die Elektro-und Datentechnik, den Fahrzeugbau und andere technische Bereiche. Sie können aber auch als Überzugs-und Beschichtungsmassen (pulverförmig) dispergiert oder als Film angewandt werden.

Die Erfindung sei an folgenden Beispielen veranschaulicht.

Beispiel 1

0,1 mol Terephthalsäure, 0.26 mol 4-Hydroxibenzoesäure, 0,07 mol Hydrochinon, 0,04 mol Dihydroxibiphenyl, 0,09 mol 2,7-Dihydroxinaphthalin und 0,1 mol der Verbindung

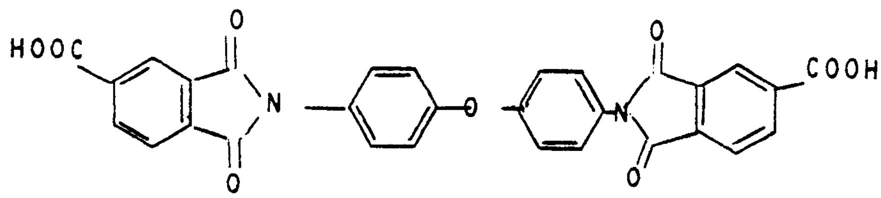

und 120 ml Acetanhydrid werden unter Stickstoffatmosphäre und Rühren innerhalb von 2 h 50 min von 150°C auf 300°C erhitzt. Dabei wird überschüssiges Acetanhydrid und Essigsäure abdestilliert. Anschließend wird innerhalb von 65 min der Druck auf 95 mbar reduziert. Man erhält eine viskose, helle, fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 153°C. Die inhärente Viskosität beträgt 0,86 dl/g, gemessen in 0,1 %iger - (gew./vol.) Lösung in Pentafluorphenol bei 60°C.

Beispiel 2

0,182 mol 4-Hydroxibenzoesäure, 0,077 mol Hydrochinon, 0,063 mol 4,4'-Dihydroxybiphenyl und 0,14 mol der Verbindung

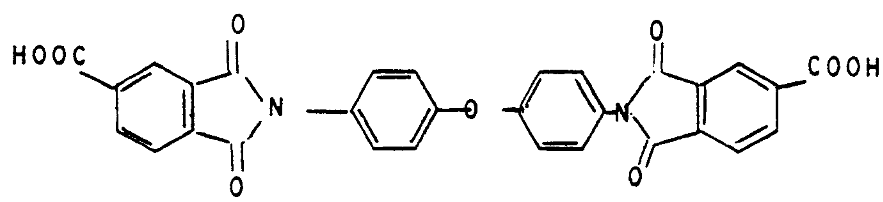

und 122 ml Acetanhydrid werden unter Stickstoffatmosphäre und Rühren innerhalb von 2 h 50 min von 150°C auf 300°C erhitzt. Dabei wird überschüssiges Acetanhydrid und Essigsäure abdestilliert. Anschließend wird innerhalb 30 min der Druck auf 60 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 158°C. Die inhärente Viskosität beträgt 1,03 dl/g, gemessen in 0,1 %iger (Gew./Vol.) Lösung in Pentafluorphenol bei 60°C.

Beispiel 3

0,182 mol 4-Hydroxybenzoesäure, 0,14 mol Hydrochinon, 0,14 mol der Verbindung

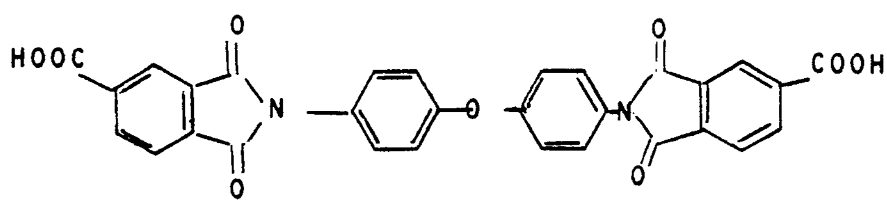

und 150 ml Acetanhydrid werden unter Stickstoffatomosphäre und Rühren innerhalb von 2 h 50 min von 150°C auf 300°C erhitzt. Dabei wird überschüssiges Acetanhydrid und Essigsäure abdestilliert. An-

schließend wird innerhalb 10 min der Druck auf 200 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 162°C und eine Schmelztemperatur von 295°C. Die inhärente Viskosität beträgt 0,93 dl/g, gemessen in 0,1 %iger (Gew./Vol) Lösung in Pentafluorphenol bei 60°C.

Beispiel 4

0,1 mol Isophthalsäure, 0,26 mol 4-Hydroxibenzoesäure, 0,07 mol Hydrochinon, 0,04 mol Dihydroxibiphenyl, 0,09 mol 2,7-Dihydroxinaphthalin und 0,1 mol der Verbindung

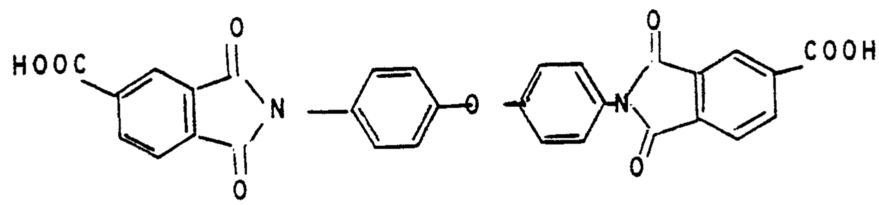

und 134 ml Acetanhydrid werden unter Stickstoffatmosphäre und Rühren innerhalb von 2 h 50 min von 150°C auf 300°C erhitzt. Dabei wird Überschüssiges Acetanhydrid und Essigsäure abdestilliert. Anschließend wird innerhalb 18 min der Druck auf 150 mbar reduziert. Man erhält eine viskose fadenbildende Schmelze. Die Polymerschmelze und das erkaltete Poly mer zeigen einen perlmuttartigen Glanz. Das Polymer besitzt eine glatte, harte und abriebfeste Oberfläche. Aus DSC-Messungen ergibt sich eine Glastemperatur von 159°C. Die inhärente Viskosität beträgt 0,92 dl/g, gemessen in 0,1 %iger (Gew./Vol) Lösung in Pentafluorphenol bei 60°C.

Beispiel 5

0,085 mol Terephthalsäure, 0,221 mol 4-Hydroxybenzoesäure, 0,085 mol Hydrochinon, 0,085 mol Dihydroxibiphenyl, 0,085 mol der Verbindung

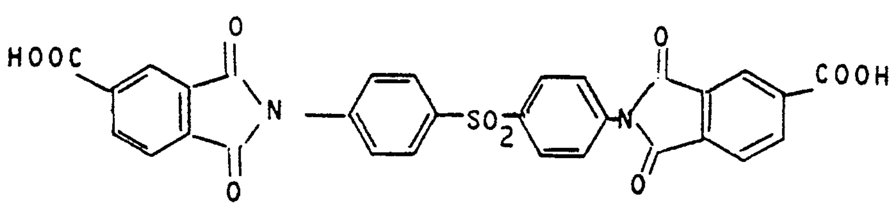

und 140 ml Acetanhydrid werden unter Stickstoffatmosphäre und Rühren innerhalb von 2 h 50 min von 150°C auf 300°C erhitzt. Dabei wird überschüssiges Acetanhydrid und Essigsäure abdestilliert. Anschließend wird innerhalb 40 min der Druck auf 85 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 184°C und eine Schmelztemperatur von 290°C.

Beispiel 6

0,08 mol Terephthalsäure, 0,208 mol 4-Hydroxibenzoesäure, 0,056 mol Hydrochinon, 0,032 mol Dihydroxibiphenyl, 0,072 mol 2,7-Dihydroxinaphthalin und 0,08 mol der Verbindung

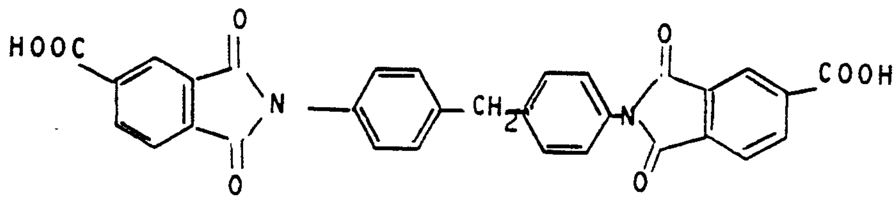

und 91 ml Acetanhydrid werden unter Stickstoffatmosphäre und Rühren innerhalb von 2 h 50 min von 150°C auf 300°C erhitzt. Dabei wird überschüssiges Acetanhydrid und Essigsäure abdestilliert. Anschließend wird innerhalb von 30 min der Druck auf 30 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 158°C. Die inhärente Viskosität beträgt 0,59 dl/g, gemessen in 0,5 %iger - (Gew./Vol) Lösung in 4-Chlorphenol bei 60°C.

## Ansprüche

1. Vollaromatische mesomorphe Polyesterimide, die unterhalb von 320°C eine flüssigkristalline fadenbildende Schmelze bilden, aufgebaut aus

a) 5 bis 35 Mol-% wiederkehrenden Einheiten der Formeln I und/oder II

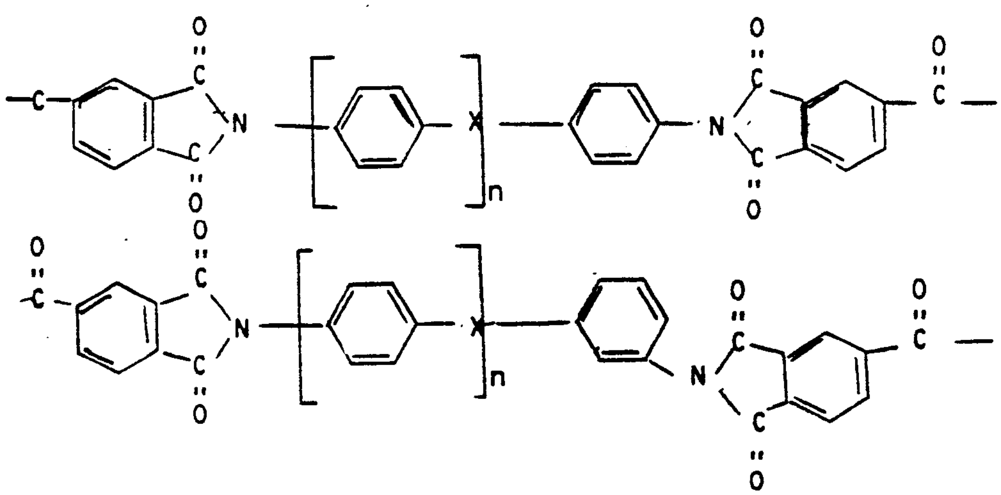

I

II

in der X und n jeweils gleich oder verschieden sein können und X für -O-, -S-, $-SO_2-$, -CO-, $-CH_2-$, $=C(CH_3)_2$ steht und n 0 oder 1 bedeutet,

b) 0 bis 30 Mol-% wiederkehrenden Einheiten der Formeln III und/oder IV

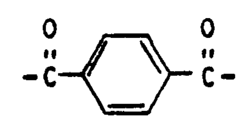

III

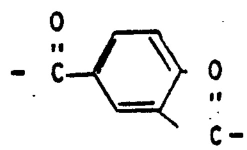

IV

c) einer Summe der Komponenten a und b entsprechenden molaren Menge mindestens einer der wiederkehrenden Einheiten der Formeln V, VI, VII oder VIII

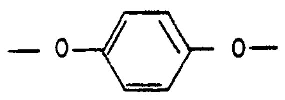 V

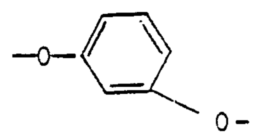 VI

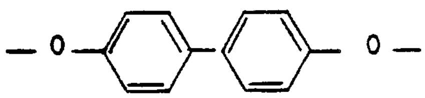 VII

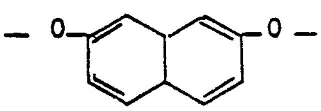 VIII

d) mindestens 10 Mol-% wiederkehrenden Einheiten der Formel IX

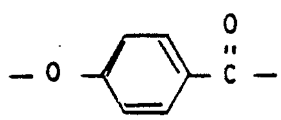 IX

e) gegebenenfalls 5 bis 25 Mol-% wiederkehrenden Einheiten der Formel X

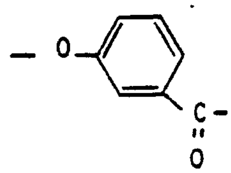 X

wobei die Summe der molaren Anteile a, b, c, d und e jeweils 100 Mol% ergibt.

2. Vollaromatische mesomorphe Polyesterimide nach Anspruch I, <u>dadurch gekennzeichnet</u>, daß sie aufgebaut sind aus

a) 7 bis 31 Mol-% wiederkehrenden Einheiten der Formeln I und/oder II

b) 0 bis 20 Mol-% wiederkehrenden Einheiten der Formeln III und/oder VI

c) einer Summe der Komponenten a und b entsprechenden molaren Mengen mindestens einer der wiederkehrenden Einheiten der Formeln V, VI, VII oder VIII

d) mindestens 20 Mol-% wiederkehrenden Einheiten der Formel IX

e) 10 bis 20 Mol-% wiederkehrenden Einheiten der Formel X

3. Vollaromatische mesomorphe Polyesterimide nach den Ansprüchen 1 und 2, <u>dadurch gekennzeichnet</u>, daß sie als Komponente c 10 bis 31 Mol.-% wiederkehrende Einheiten der Formel V und/oder 5 bis 25 Mol.-% wiederkehrende Einheiten der Formeln VI, VII und/oder VIII enthalten.

4. Vollaromatische mesomorphe Polyesterimide nach den Ansprüchen 1 bis 3, <u>dadurch gekennzeichnet</u>, daß sie als Komponente c wiederkehrende Einheiten der Formeln V, VI und/oder VII oder Mischungen derselben enthalten.

5. Vollaromatische mesomorphe Polyesterimide nach den Ansprüchen 1 bis 4, <u>dadurch gekennzeichnet</u> , daß sie eine Glasübergangstemperatur Tg von ≥140°C haben.

6. Verfahren zur Herstellung von vollaromatischen mesomorphen Polyesterimiden nach den Ansprüchen 1 bis 5, dadurch gekennzeichnet, daß man die Ausgangsstoffe in Form ihrer underivatisierten Hydroxy-bzw. Carboxyverbindungen in einem Einstufen-Verfahren in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

7. Verfahren nach Anspruch 6, dadurch gekennzeichnet, daß man die vollaromatischen Polyesterimide nach der Kondensation in der Schmelze durch Kondensation in fester Phase bei einer Temperatur von 150 bis 250°C nachkondensiert.

8. Verwendung von vollaromatischen mesomorphen Polyesterimiden nach den Ansprüchen 1 bis 7 zur Herstellung von Fasern, Folien und Formteilen.

Patentansprüche für folgenden Vertragstaat : AT

1. Verfahren zur Herstellung von vollaromatischen mesomorphen Polyesterimiden, die unterhalb von 320°C eine flüssigkristalline fadenbildende Schmelze bilden, aufgebaut aus

a) 5 bis 35 Mol-% wiederkehrenden Einheiten der Formeln I und/oder II

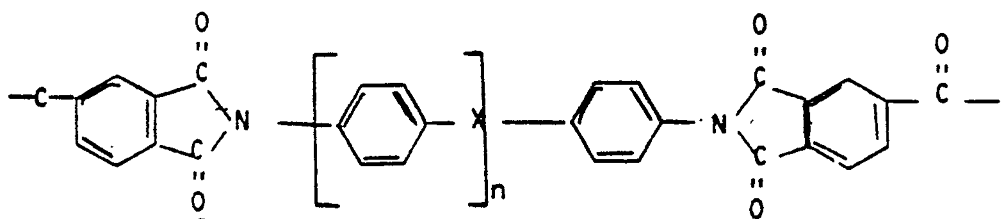

I

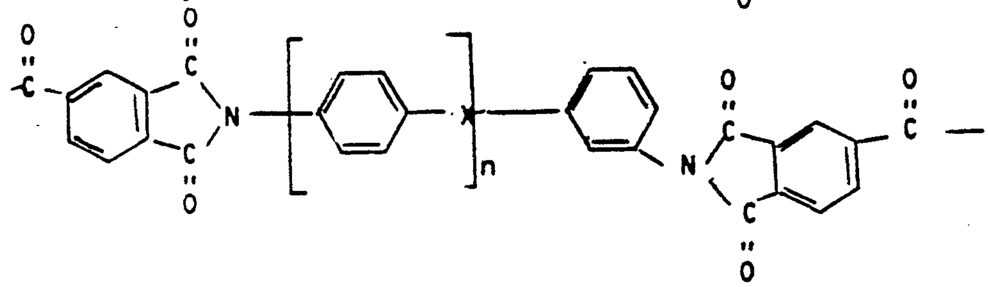

II

in der X und n jeweils gleich oder verschieden sein können, und X für -O-, -S-, $-SO_2-$, -CO-, $-CH_2-$, $=C(CH_3)_2$ steht und n O oder 1 bedeutet,

b) O bis 30 Mol-% wiederkehrenden Einheiten der Formeln III und/oder IV

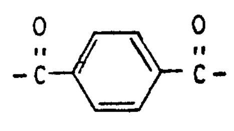

III

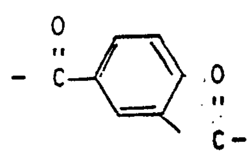

IV

c) einer Summe der Komponenten a und b entsprechenden molaren Menge mindestens einer der wiederkehrenden Einheiten der Formeln V, VI, VII oder VIII

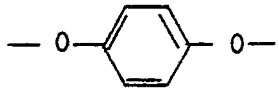

V

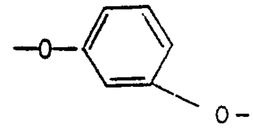

VI

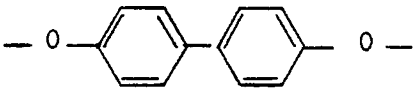

VII

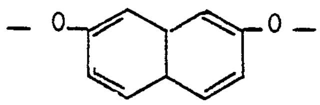

VIII

d) mindestens 10 Mol-% wiederkehrenden Einheiten der Formel IX

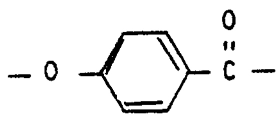

IX

e) gegebenenfalls 5 bis 25 Mol-% wiederkehrenden Einheiten der Formel X

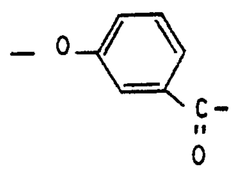

X

wobei die Summe der molaren Anteile a, b, c, d und e jeweils 100 Mol-% ergibt, durch Umsetzen der den Einheiten 1 bis 8 entsprechenden Hydroxy-und Carboxyverbindungen oder deren Ester bildenden Derivate.

2. Verfahren nach Anspruch 1, <u>dadurch gekennzeichnet</u>, daß die vollaromatischen mesomorphen Polyesterimiden aufgebaut sind aus

a) 7 bis 31 Mol-% wiederkehrenden Einheiten der Formeln I und/oder II

b) 0 bis 20 Mol-% wiederkehrenden Einheiten der Formeln III und/oder VI

c) einer Summe der Komponenten a und b entsprechenden molaren Mengen mindestens einer der wiederkehrenden Einheiten der Formeln V, VI, VII, oder VIII

d) mindestens 20 Mol-% wiederkehrenden Einheiten der Formel IX

e) 10 bis 20 Mol-% wiederkehrenden Einheiten der Formel X

3. Verfahren nach den Ansprüchen 1 und 2, <u>dadurch gekennzeichnet</u>, daß die vollaromatischen mesomorphen Polyesterimiden als Komponente c 10 bis 31 Mol.-% wiederkehrende Einheiten der Formel V und/oder 5 bis 25 Mol.-% wiederkehrende Einheiten der Formeln VI, VII und/oder VIII enthalten.

4. Verfahren nach den Ansprüchen 1 bis 3, <u>dadurch gekennzeichnet</u>, daß die vollaromatischen mesomorphen Polyesterimiden als Komponente c wiederkehrende Einheiten der Formeln V, VI und/oder VII oder Mischungen derselben enthalten.

5. Verfahren nach den Ansprüchen 1 bis 4, <u>dadurch gekennzeichnet</u>, daß die vollaromatischen mesomorphen Polyesterimiden eine Glasübergangstemperatur Tg von =140°C haben.

6. Verfahren nach den Ansprüchen 1 bis 5, <u>dadurch gekennzeichnet</u>, daß man die Ausgangsstoffe in Form ihrer underivatisierten Hydroxy-bzw. Carboxyverbindungen in einem Einstufen-Verfahren in den beschriebenen molaren Verhältnissen unter Zusatz von überschüssigem Fettsäureanhydrid bei erhöhter Temperatur umsetzt und Fettsäureanyhydrid und Fettsäure aus dem Reaktionsgemisch abdestilliert.

7. Verfahren nach den Ansprüchen 1 bis 6, dadurch gekennzeichnet, daß man die vollaromatischen Polyesterimide nach Kondensation in der Schmelze durch Kondensation in fester Phase bei einer Temperatur von 150 bis 250°C nachkondensiert.

8. Verwendung von vollaromatischen mesomorphen Polyesterimiden nach den Ansprüchen 1 bis 7 zur Herstellung von Fasern, Folien und Formteilen.